# NEW EUROPEAN PATENT SPECIFICATION

(11) **EP 1 289 683 B2**
(45) Date of publication and mention of the opposition decision: **05.09.2007**
(45) Mention of the grant of the patent: 11.08.2004
(21) Application number: 01936484.3
(22) Date of filing: 22.05.2001
(51) Int. Cl.: B09B 3/00, B29B 17/00, D21C 5/02

(54) **METHOD FOR PROCESSING WASTE AND WASTE PROCESSING PLANT**
VERFAHREN UND ANLAGE ZUR VERARBEITUNG VON ABFALL
PROCEDE DE TRAITEMENT DES DECHETS ET INSTALLATION DE TRAITEMENT DES DECHETS

(30) Priority: 22.05.2000 FI 20001219
(43) Date of publication of application: 12.03.2003
(73) Proprietor: Metso Paper, Inc., 00130 Helsinki (FI)
(72) Inventor: HAUTALA, Jouko, FIN-33400 Tampere (FI); RISTOLA, Petri, FIN-00630 Helsinki (FI); RIIVARI, Petteri, FIN-49540 Metsäkylä (FI); SIPILÄ, Kai, FIN-02200 Espoo (FI)
(74) Representative: TBK-Patent
(86) International application number: PCT/FI2001/000495
(87) International publication number: WO 2001/089730

(56) References cited:
- EP-A- 0 838 532
- FI-A- 982 737
- GB-A- 2 026 019
- SE-B- 415 677
- DATABASE WPI Section Ch, Week 199648 Derwent Publications Ltd., London, GB; Class A13, AN 1996-480391 XP002901870 & JP 08 243430 A (HITACHI ZOSEN CORP), 24 September 1996 (1996-09-24)
- DATABASE WPI Section Ch, Week 199138 Derwent Publications Ltd., London, GB; Class J09, AN 1991-276679 XP002901871 & JP 03 181379 A (YG JOKAN SOGYO), 7 August 1991 (1991-08-07)
- E1 and E3 listed in par. 2.3 of "Facts and Submissions" in the decision (page 1).

## Description

The invention relates to a method for processing waste, in particular for utilising the recyclable material contained in waste, according to the preamble of claim 1.

The invention also relates to a waste processing plant, in particular a plant processing waste fractions suitable for recycling of material, according to the preamble of claim 7.

Such a method and a plant are known e.g. from GB-A-2 026 019.

Conventionally, the options available in waste disposal and processing have been transport to landfill sites, incineration in mass incineration plants and - to a limited extent - recovery of recyclable materials. The last-mentioned option generally requires separation of wastes at source wherein recyclable waste fractions, such as biowaste, paper and board, glass and metals, are separated and collected separately. However, source separation is always insufficient, which means that the amount of mixed waste is now, and will also be in future, considerable.

The form of energy recovery that has become popular recently is one in which recovered and/or refuse-derived fuel (REF, RDF) processed from waste is burned either in conventional boilers together with other fuel or as the main fuel in combustion plants specially designed for recovered/refuse-derived fuel. The wastes most suitable for energy recovery include packaging, paper and plastic wastes from industry and commerce as well as construction wastes, which can constitute as much as 70 to 80 % of the amount of waste usually transported to landfills. Dry household waste can also be used in the production of energy provided that, among other things, metals, glass and biowaste have been separated from it first.

Most economically, recovered fuel is produced from a source-separated combustible waste fraction, i.e. the so-called energy fraction of waste. The processing stages of this REF fuel (recovered fuel) typically include removal of oversized pieces, crushing of waste, separation of metals as well as removal of sand and stones. Finished REF fuel contains predominantly plastics, wood, paper and board. The proportion of impurities in the fuel may be, for example, of the order of 5 % depending of the sorting process. Recovered fuel can also be produced from unsorted mixed waste by mechanical handling processes, in which case the end product is called RDF fuel (refuse-derived fuel). A difference with respect to the handling of source-separated waste is constituted by a more mixed composition of the waste raw material, which is mainly shown as a higher biowaste content. Consequently, more sorting stages are needed in the production of RDF fuel than at an REF plant, for example, gravimetric separation stages, i.e. sorting stages based on the size and density of particles, whereby heavy matter, such as food scraps, can be efficiently separated from the fraction intended for combustion. The composition of finished RDF fuel is very much like that of REF fuel, but the proportion of impurities in it can be slightly higher, for example, of the order of 8 %.

Energy recovery from waste should not be an end in itself, but rather aim for sensible macroeconomical reclamation of wastes or for making them harmless. In all reclamation of waste, the primary object should be the recovery of materials contained in waste when it is economically profitable and, only secondarily, utilisation of waste as fuel. Landfilling should be the very last option.

Waste wood collected separately has been used to some extent as raw material in the manufacture of particleboard and fibreboard. The manufacture of panelboard products from waste wood requires careful cleaning, screening and sorting of raw material. On the other hand, no one has as yet come up with the original idea of recovering waste wood from mixed waste or from the energy fraction of waste.

As it is now, the degree of recycling of paper fibres is low in many areas, but increasing pressures steer towards enhanced recycling and replacement of virgin fibre material with recycled fibres to an ever-increasing extent. Part of good quality fibre (e.g. packaging waste) often ends up among mixed waste, from which it is difficult to collect and/or recover it by the current methods.

WO application publication 98/18607 describes a process for treatment of waste that contains recyclable components, in which process waste is agitated in water employing mechanical force, whereby the size of pieces in the waste is reduced and fibres are suspended in water. The heavy fraction containing metals, the lightweight fraction containing plastics and the fraction containing fibres are separated from the suspension in stages. The process is intended for treatment of packaging waste which contains different plastics and mixed materials, in particular board lined with plastic and/or metal foils, and metal cans. The fibre content of this kind of raw material is generally relatively low, wherefore the special problems associated with the recovery of fibres and with the quality of pulp have not been taken into consideration to a sufficient degree in the process. The publication also fails to disclose any solution to such substantial problems as meeting of energy demand and circulation of process waters.

The recovery of fibres from waste is also discussed, among other things, in GB patent 1,364,474 and in published GB application 2,026,019.

The document EP-A-0 838 532 discloses a method and a plant for processing used packages of the "tetrabrick" type, in which paper aluminum and polyethylene are separately recovered, the polyethylene fraction being recovered by pyrolysio.

It is a general object of the invention to make it possible to utilise the recyclable components contained in waste in an efficient and economically profitable manner. It is also an object of the invention to provide a waste processing concept which maximises the reclamation of materials within economic limits and which is also advantageously self-sufficient in its energy consumption.

With a view to achieving these objects, the present invention provides a method as defined in claim 1.

Similarly, the present invention provides a waste processing plant as defined in claim 7.

In the method according to the invention, waste is pre-treated first to remove any undesirable matter. For this it is possible to use, for example, techniques known from the production of recovered/refuse-derived fuel in which waste is crushed and sorted and metal, stones, biowaste and the like are removed from it. After that, fibre waste is separated from the other waste and processed into a raw material for paper or board by using techniques known in themselves. Plastics-containing matter is separated from the waste and processed into plastic oil by thermal heat treatment, i.e. by pyrolysis. The by-products from the processes and the residual waste fraction from the processing of waste are used as an energy source when energy is produced for the needs of different process stages.

The waste processing plant according to the invention comprises:
- devices for removing undesirable matter from waste,
- devices for separating a fibre fraction from the other waste and devices for processing it into a raw material for paper or board,
- devices for separating a plastics fraction from the other waste and devices for processing it into plastic oil as thermal heat treatment in a pyrolyser, and
- devices for producing the energy needed in the different processes of the waste processing plant, which devices have been arranged to use as fuel the by-products which have been produced in the different process stages and the waste fraction which remains of the processing.

Energy and in particular heat energy are needed, for example, in the following process stages: slushing of waste carried out at elevated temperature; pressing and/or drying of pulp, paper or board; drying of crushed wood intended for raw material of particleboard; drying of plastics fractions before a pyrolyser; drying of waste sludges before combustion, etc. Among other things, a fluidised bed boiler or a gasification reactor placed in connection with a boiler may be used as equipment in energy production that makes use of waste materials.

The treatment of waste can also include a stage in which waste wood is separated from the other waste and processed into a raw material for particleboard or equivalent. In that connection, the treatment may include separation of a wood fraction containing undesirable materials from the other wood fraction. By this kind of separation is meant the chemical or physical separation of wood fractions that contain organic chlorine components or heavy metals or volatile organic components (VOC). The waste wood obtained from separators is passed, for example, to a fluidised bed boiler which has been provided with equipment for cleaning flue gases as required by the EU waste incineration directive.

Advantageously, PVC plastics are separated from the plastic fraction of waste chemically or by a chemical classifier, such as an NIR near-infrared classifier, in a so-called PVC separator before the plastics are processed into plastic oil. Unlike, for example, polyethylene, good quality fuel oil is, as known, not obtained from PVC in thermal treatment, but, its presence in the plastic fraction would substantially reduce the yield and quality of product oil. PVC plastics can be used as mixed fuel in energy production, in which connection chlorine emissions are prevented by means of cleaning devices provided after the boiler.

An abundance of water is needed in the various processes of the waste processing plant and in particular in recovery and further processing of fibres. To reduce the consumption of fresh water, the used waters of the waste processing plant are recovered, treated and returned to circulation. In the treatment of fresh water it is also possible to use an evaporation technique which takes inexpensive heat energy from the fluidised bed boiler.

From the point of view of waste incineration capacity and materials recycling targets, it is advantageous to recover the fibre, plastics and possibly also wood fractions which are contained in recovered fuel and which are suitable for recycling. In the invention, this is accomplished by integrating certain stages which belong to the process of manufacturing pulp in a paper mill, to the process of pyrolysing plastic oil and possibly also to the process of manufacturing particleboard with a conventional waste processing plant that produces recovered/refuse-derived fuel. Because of the invention, a larger portion of waste material than before can be recycled instead of incineration, and the energy required by the manufacturing processes is produced by combusting waste. If inexpensive, purchased energy, for example, in respect of electricity can also be partly relied on in the manufacturing processes.

The concept according to the invention is very suitable for processing source-separated dry waste coming from commerce, industry and a municipality, but by increasing the number of pre-treatment stages it can also be applied to the treatment of unsorted mixed waste. The method makes it possible to recycle new waste fractions that would otherwise be either passed to energy recovery or landfilled.

In the following, the invention will be described with reference to the appended figures, to the embodiments of which the invention is, however, not meant to be narrowly confined.

Figure 1 shows the principle of a waste treatment process in which recyclable fractions are separated from waste material for further processing.

Figure 2 shows recovery of fibre from waste in greater detail.

In the first stage 1 of the waste treatment process, waste is passed to treatment stages known from refuse-derived fuel production plants, in which stages the waste is crushed and metals are removed from it by means of magnetic separators and eddy current separators. The crushing stage may be preceded by removal of oversized pieces and/or by optical sorting. Glass, stones, biowaste and other similar impurities are separated by means of appropriate mechanical and gravimetric classifiers as far as possible as separate fractions, whereby they too can be included in materials recycling. The treatment of mixed waste may require a higher number of and more efficient sorting and cleaning stages than the treatment of source-separated energy waste, but by means of the known technology it is also possible to process mixed waste into refuse-derived fuel.

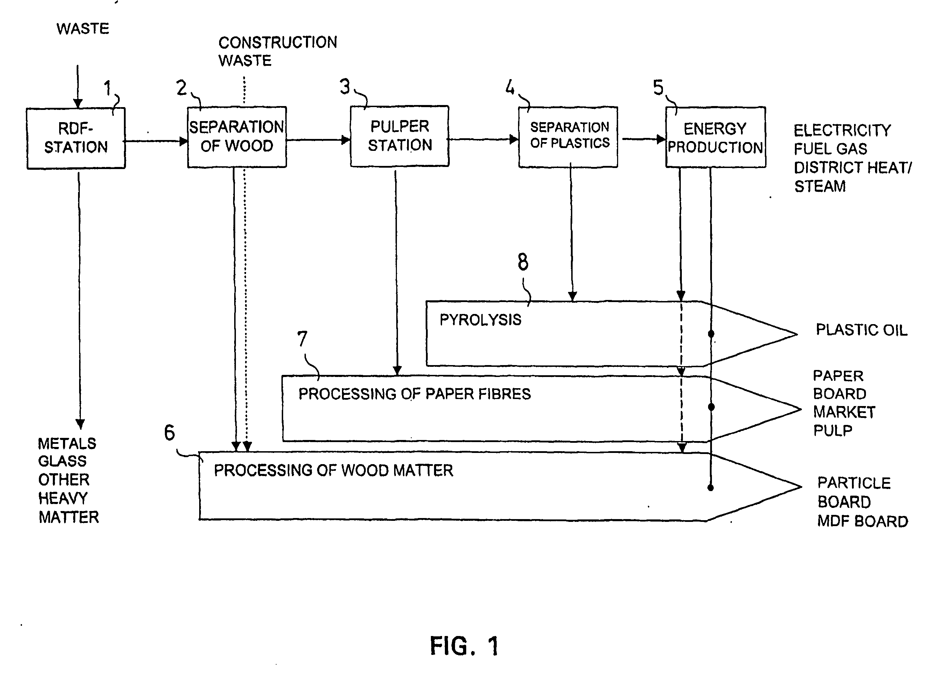

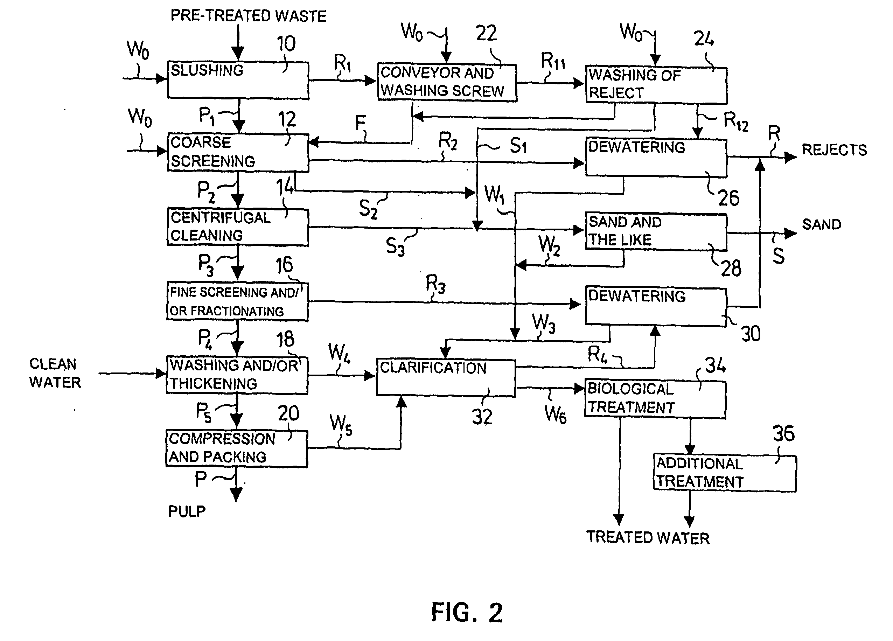

After pre-treatment, the waste is passed in the example of Fig. 1 to wood separation 2, from which the separated wood material is passed to a process 6 for further processing of the waste wood. The waste fraction rich in plastics and paper is passed further to a pulper station 3, in which the fibre material contained in the waste is suspended in water and separated so as to be passed to paper fibre processing stages 7. The recovery of fibres is described in greater detail in connection with Fig. 2. After separation of fibres, the waste stream is passed to plastics separation 4, from which at least some of the plastics are passed to pyrolysis treatment 8, in which pyrolysis oil is produced from waste plastics. After separation of recoverable fractions, the remaining waste stream portion as well as the rejects produced as by-products in the different process stages are used as fuel in the energy production of the plant. If the refuse-derived fuel type of combustible end product is produced in an amount in excess of the need of the plant, it may also be supplied to outside users. Alternatively, the plant can sell out extra energy.

In an energy production unit 5 arranged in connection with the waste processing plant, dust, sludge, reject and the like generated as by-products in the different processes are combusted and energy is produced for the needs of the different process stages. The possible sites of use of heat energy include, among other things, slushing, the drying of pulp, paper or board, the drying of wood chips, and the drying of plastics waste before the pyrolyser. For example, a mass incineration plant, a fluidised bed boiler, a gasifier in combination with a pulverised fuel boiler, or a cement kiln which is at the same time capable of utilising the ash produced in connection with waste combustion as raw material for cement, can operate as the energy production unit. One further alternative worthy of consideration is recovery and use of the ash produced in waste combustion as a filler in the manufacture of paper. The cleaning of flue gas is accomplished in accordance with the EU waste incineration directive, as known, for example, by means of bag filters and scrubbers using additional chemicals.

Although in the example of Fig.1, wood, fibre and plastics are separated in successive process stages from the fraction passed to combustion, all of these stages are not necessary, but the method can also be carried out such that only one or two of the above-mentioned recyclable fractions is/are separated from waste and all other waste is used as fuel in the production of energy. Depending on the composition of waste, it may be, for example, advantageous that the wood separation stage is by-passed and the wood is allowed to be passed to combustion together with the rejects produced in the process. From the point of view of optimising the pyrolysis process, it is advantageous to avoid passing wood material so as to be mixed with the material to be pyrolysed. The order of separation of the recoverable fractions may also differ from that shown in Fig. 1, for example, so that plastics materials are already separated partly before separation of fibre material.

Fig. 2 shows a fibre recovery line which can be used for accomplishing the operations of the pulper station 3 and the paper fibres processing line 7 shown in Fig. 1. The pulper station is supplied with pre-treated waste. The waste is slushed in a continuous-operation high-consistency pulper 10, advantageously at a temperature of about 60 °C. A material stream P₁ containing fibres suspended in water and a material stream R₁ containing non-defibrable waste are discharged substantially continuously from the pulper 10. A screw conveyor 22 moves the reject fraction R₁ from the pulper 10 into a combined washing and drying drum 24 of the reject.

The reject is washed by means of circulation water W₀ both on the screw conveyor 22 and in the washing drum 24, and in order to improve the yield of fibres, washing waters F are returned to be mixed with the main stream P₁ of fibre pulp.

The fibre suspension P₁ taken out of the pulper 10 through a screen plate is passed to coarse screening 12, in which coarse impurities R₂ and sand S₂ still remaining in it are removed from it. The diameter of holes in the screen plate of the pulper 10 is 8 - 12 mm and most advantageously about 10 mm. In the coarse screening 12 of pulp, screen plates are used in which the diameter of holes is 2 - 4 mm and most advantageously about 3 mm. A correctly selected hole size is important in order that, on the one hand, the screen shall not retain an excessive amount of fibres and, on the other hand, centrifugal cleaning 14 provided after the coarse screening 12 should function sufficiently well.

In the centrifugal cleaning stage 14, mainly sand and other heavy materials S₃ are separated from coarse-screened pulp P₂. After the centrifugal cleaning 14, pulp P₃ is passed to a fine screening and/or fractionating stage 16, from which accept P₄ is passed to pulp washing and/or thickening stages 18. In the last processing stage 20; washed pulp P₅ is compressed to a dry matter content of about 50 % and packed in transport containers for transport to a customer. Alternatively, the last stage 20 of the recovery line may include the drying of pulp to a dry matter content of about 90 % or its transfer as wet to an adjacent paper or board machine.

Slushing reject R₁₂ washed by means of the conveyor screw 22 and the reject drum 24 is passed to dewatering 26, which can be accomplished, for example, by means of a screw press. The reject R₂ from the coarse screening 12 is processed together with the reject R₁₂ coming from the slushing process. After mechanical dewatering, all rejects R can be passed to combustion or, alternatively, the coarse rejects R₁₂, R₂ can be passed to the plastics separation 4, as shown in Fig. 1, in which connection only reject R₃ from fine screening and sludge R₄ from clarification of waste water are passed directly to combustion.

The rejects R₃ produced in the fine screening and/or fractionating 16 are passed to dewatering 30, which can be accomplished, for example, by means of a drainage band press, after which the rejects are most advantageously passed to combustion. As there is an abundance of inexpensive fibre raw material available and there exists a sensible site of use for the rejects, in the recovery of fibres, the yield of fibres is not necessarily sought to be maximised, as in conventional recycling processes, but the quality of fibres can be optimised in it. Thus, the fine screening 16 of pulp can be enhanced and the amount of the reject R₃ can be increased as compared with conventional fibre recovery processes. Disposal of the increased reject volume presents no problem because said reject R₃ can be combusted in the energy production unit 5 of the waste processing plant.

Heavy sand-containing waste fractions S₁ - S₃ are separated in the reject drum 24, in the coarse screening 12 and centrifugal cleaning 14 of pulp, and water is removed from these fractions in a processing stage 28, after which sand S can be transported to a landfill site or used as earth filling.

The waste waters from the recovery line of fibres, which are, on the one hand, filtrates W₁ - W₃ separated from the rejects R₁₁, R₂, R₃ and sand S₁, S₂, S₃ and, on the other hand, filtrates W₄ - W₅ derived from pulp washing and/or thickening 16 and pulp compression 20, are passed to a clarification stage 32, from which the sludge R₄ is passed, together with the reject R₃ from fine screening, to the dewatering 30 and further to combustion. Clarified waste water W₆ is passed to a biological treatment stage 34, after which the cleaned water can be circulated to the beginning of the process for use as washing or dilution water in the pulper 10, in the coarse screening 12, on the screw conveyor 22 and/or in the reject drum 24. Alternatively, part of the biologically treated waste water can be passed to additional treatment stages 36, which may be, for example, ultra- or nanofiltration. The clean water necessary for the water balance of the process is passed to the pulp washing and thickening stages 18.

Recyclable waste wood can be separated from the other waste either in the first stage of the separation process when the waste is dry or after pulping when the waste is wet. The waste has already been crushed in connection with pre-treatment into a certain size of pieces and harmful materials have been removed from it. To produce raw material suitable for the manufacture of particleboard, oversized matter, fine matter, lightweight matter, such as plastics and paper, as well as heavy matter, such as stones and sand, are removed from the waste wood by means of different cleaning, separation and sorting devices. The size of the pieces in waste wood is further reduced by crushing or chipping, after which metals and other similar impurities released from the wood raw material in connection with processing are further removed from it. The impurities and chemicals contained in waste wood are largely transferred to fine matter and dust, which can be passed to combustion. The handling of the crushed wood also usually includes a drying stage that requires heat energy. The wood raw material can be processed into an end product in connection with the waste processing plant or, alternatively, the ready-for-use crushed wood prepared from wood can be transported to a panelboard manufacturer.

For screening and cleaning of the wood raw material in the different stages of processing is preferably used the roller screen known under the trademark ClassiScreen™, marketed by the applicant, which screen is very suitable for separating fine matter, sand and an oversized fraction both from dry and wet wood material. The processing of the wood raw material can be supplemented with the cleaning and screening system known under the trademark ClassiCleaner^{™}, which comprises a vibrating table and an air separator in addition to a ClassiScreen^{™} roller screen. In this connection, reference is also made to FI patents 97527, 98605 and 98710, which describe devices for removing impurities from powdery or piece-like material, such as raw material of particleboard.

In connection with the waste processing plant there may also be devices for separating and possibly fractionating the plastics fraction contained in waste material, after which the plastics are pyrolysed into plastic oil using, for example, equipment which has become known under the trademark ITP^{™} Pyrolyser. When organic matter containing volatile chemical compounds, such as waste plastics, is heated in a hot gas stream free from oxygen for a very short period of time, pyrolysis vapour is generated from organic matter, which vapour condenses into pyrolysis oil when the temperature decreases. Typically, pyrolysis is carried out at a temperature of 300 - 800 °C and the reaction time is from tenths of a second to a few hundred seconds. A pyrolysis reactor and a condenser are advantageously placed in connection with a boiler, in which connection part of the heat energy generated by the boiler is passed to the pyrolyser. In addition, heat energy is needed for drying the raw material which is pyrolysed, which improves the quality of the pyrolysis oil provided as the end product by reducing its water content. Pyrolysis oil produced from waste plastics is suitable as such for use, among other things, as fuel oil and it can be processed further into other oil-based products. The plastics-containing reject obtained from the fibre recovery process according to the invention is, according to recent investigations, very suitable for the pyrolysis process. In the experiments carried out, a pyrolysis oil product which is as good as mineral oil and capable of being mixed with it can be obtained from polyethylene waste in an amount of about 80 to 90 wt% of the dry feed stream depending on the temperature and delay time of the process.

After separation of the fibre fraction and/or the wood fraction and/or the plastics fraction, a certain amount of combustible waste still remains of the initial waste, the quantity and quality of the remaining waste depending on the number of the separation stages of the recyclable fractions and on the quality of the waste raw material. Said waste is suitable as such for use as fuel in energy production.

## Claims

1. A method for processing waste, in particular for utilising the recyclable material contained in waste, wherein the waste is pre-treated for removing undesirable matter, a fibre fraction and a plastics fraction are separated from the other waste, the fibre fraction is processed into a raw material for paper or board, and the by-products from the processes and the waste fraction which remains of the processing are used as energy for the needs of the processes,
**characterised in that**
the method comprises stages in which the waste is slushed in a continuous-operation high-consistency pulper to suspend in water the fibres contained in the waste,
a fibre fraction and a plastics fraction are continuously discharged from the pulper as separate fractions,
the plastics fraction is washed in one or more steps, wherein water used for washing the plastics fraction is recycled to be mixed with the fibre fraction, and
the plastics fraction is processed into plastic oil in a pyrolyser.

2. A method according to claim 1, **characterised in that** it comprises a stage in which waste wood is separated from the other waste and processed into a raw material for particleboard or equivalent.

3. A method according to claim 1 or 2, **characterised in that** at least some of the process waters of the waste processing plant are treated and returned to circulation.

4. A method according to any one of the preceding claims, **characterised in that** PVC plastics are separated from the plastics fraction before the plastics are processed into plastic oil.

5. A method according to claim 4, **characterised in that** the PVC plastics are passed to energy production.

6. A method according to any one of the preceding claims, **characterised in that** a fluidised bed boiler is used in energy production, which boiler generates the heat needed in the pyrolysis of plastics and utilises the solid combustion residues produced in the pyrolysis.

7. A waste processing plant, in particular a plant for processing waste fractions suitable for recycling of material, comprising devices for removing undesirable matter from waste, devices for separating a fibre fraction and a plastics fraction from the other waste, devices for processing the fibre fraction into a raw material for paper or board, and devices for producing the energy needed in the different processes of the waste processing plant, which devices have been arranged to use as fuel the by-products which have been produced in the different process stages and the waste fraction which remains of the processing,
**characterised in that**
the plant comprises a pulper for separating the fibre fraction and the plastics fraction as separate fractions,
devices for washing the plastics fraction in one or more steps, wherein water used for washing the plastics fraction is recycled to be mixed with the fibre fraction, and
a pyrolyser for processing the plastics fraction into plastic oil as thermal heat treatment.

8. A waste processing plant according to claim 7,
**characterised in that** it additionally comprises devices for separating waste wood from the other waste and devices for processing it into a raw material for particleboard or equivalent.

9. A waste processing plant according claim 7 or 8, **characterised in that** it comprises devices for treating and circulating process waters.

10. A waste processing plant according to any one of claims 7 to 9, **characterised in that** it comprises devices for separating PVC plastics from the waste plastics fraction before the plastics are processed into plastic oil.

11. A waste processing plant according to claim 7,
**characterised in that** it comprises a fluidised bed boiler arranged to generate the energy needed in the processes and to burn the rejects which have been produced.

12. A waste processing plant according to claim 11,
**characterised in that** the fluidised bed boiler has been arranged to generate the heat needed in the pyrolysis of plastics and to utilise the solid combustion residues produced in the pyrolysis.

## Patentansprüche

1. Verfahren zum Aufbereiten von Abfallstoff insbesondere für ein Nutzen des recyclefähigen Materials, das im Abfallstoff enthalten ist, wobei der Abfallstoff für ein Entfernen von unerwünschtem Stoff vorverarbeitet wird, ein Faseranteil und ein Kunststoffanteil von dem restlichen Abfallstoff getrennt werden, der Faseranteil zu einem Rohmaterial für Papier oder Karton aufbereitet wird und die Nebenprodukte von den Prozessen und der Abfallstoffanteil, der von dem Aufbereiten zurückbleibt, als Energie für den Bedarf der Prozesse verwendet werden,
**dadurch gekennzeichnet, dass**
das Verfahren Stufen aufweist, bei denen der Abfallstoff bei einem Hochdichtestofflöser mit kontinuierlichem Betrieb zu einem Brei gestaltet wird, um in Wasser die in dem Abfallstoff enthaltenen Fasern zu suspendieren,
ein Faseranteil und ein Kunststoffanteil von dem Stofflöser kontinuierlich als getrennte Anteile abgegeben werden,
der Kunststoffanteil bei einem oder mehreren Schritten gewaschen wird, wobei das zum Waschen des Kunststoffteils verwendete Wasser wiederaufbereitet wird, um mit dem Faseranteil vermischt zu werden, und
der Kunststoffanteil zu Kunststofföl in einer Pyrolyse-Vorrichtung aufbereitet wird.

2. Verfahren gemäß Anspruch 1, **dadurch gekennzeichnet, dass** es eine Stufe aufweist, bei der Holzabfallstoff von dem restlichen Abfallstoff getrennt wird und zu einem Rohmaterial für Partikel, Karton oder dergleichen aufbereitet wird.

3. Verfahren gemäß Anspruch 1 oder 2, **dadurch gekennzeichnet, dass** zumindest ein Teil der Prozesswässer der Abfallstoffbehandlungsanlage aufbereitet wird und zu der Zirkulation zurückkehrt.

4. Verfahren gemäß einem der vorherigen Ansprüche, **dadurch gekennzeichnet, dass** PVC-Kunststoffe von dem Kunststoffanteil getrennt werden, bevor die Kunststoffe zu Kunststofföl aufbereitet werden.

5. Verfahren gemäß Anspruch 4, **dadurch gekennzeichnet, dass** die PVC-Kunststoffe zu einer Energieproduktion treten.

6. Verfahren gemäß einem der vorherigen Ansprüche, **dadurch gekennzeichnet, dass** ein Fluidisierbettboiler bei der Energieproduktion verwendet wird, wobei der Boiler die Wärme erzeugt, die bei der Pyrolyse von Kunststoffen benötigt wird, und die festen Verbrennungsreststoffe nutzt, die bei der Pyrolyse erzeugt werden.

7. Abfallbehandlungsanlage, insbesondere Anlage für ein Aufbereiten von Abfallstoffanteilen, die für ein Recyceln von Material geeignet sind, wobei die Anlage Folgendes aufweist:
Vorrichtungen für ein Entfernen von unerwünschtem Stoff aus dem Abfallstoff,
Vorrichtungen für ein Trennen eines Faseranteils und eines Kunststoffanteils von dem restlichen Abfallstoff,
Vorrichtungen für ein Aufbereiten des Faseranteils zu einem Rohmaterial für Papier oder Karton, und
Vorrichtungen für ein Erzeugen der Energie, die bei den verschiedenen Prozessen der Abfallstoffbehandlungsanlage benötigt wird,
wobei die Vorrichtungen so eingerichtet sind, dass sie als Brennstoff die Nebenprodukte, die bei den verschiedenen Prozessstufen erzeugt worden sind, und den Abfallstoffanteil, der bei dem Aufbereiten übrig bleibt, verwenden,
**dadurch gekennzeichnet, dass**
die Anlage einen Stofflöser für ein Trennen des Faseranteils und des Kunststoffanteils als getrennte Anteile, Vorrichtungen für ein Waschen des Kunststoffanteils bei einer oder mehreren Stufen, wobei das zum Waschen des Kunststoffteils verwendete Wasser wiederaufbereitet wird, um mit dem Faseranteil vermischt zu werden, und eine Pyrolyse-Vorrichtung für ein Aufbereiten des Kunststoffanteils zu Kunststofföl als eine Wärmebehandlung aufweist.

8. Abfallstoffbehandlungsanlage gemäß Anspruch 7, **dadurch gekennzeichnet, dass** sie zusätzlich Vorrichtungen für ein Trennen von Holzabfallstoff von dem restlichen Abfallstoff und Vorrichtungen für ein Aufbereiten von diesem zu einem Rohmaterial für Partikel, Karton oder dergleichen aufweist.

9. Abfallstoffbehandlungsanlage gemäß Anspruch 7 oder 8, **dadurch gekennzeichnet, dass** sie Vorrichtungen für ein Behandeln und Zirkulieren von Prozesswässern aufweist.

10. Abfallstoffbehandlungsanlage gemäß einem der Ansprüche 7 bis 9, **dadurch gekennzeichnet, dass** sie Vorrichtungen für ein Trennen von PVC-Kunststoffen von den Abfallstoffkunststoffanteilen aufweist, bevor die Kunststoffe zu Kunststofföl aufbereitet werden.

11. Abfallstoffbehandlungsanlage gemäß Anspruch 7, **dadurch gekennzeichnet, dass** sie einen Fluidisierbettboiler aufweist, der so eingerichtet ist, dass er die Energie erzeugt, die bei den Prozessen benötigt wird, und die Reststoffe verbrennt, die erzeugt worden sind.

12. Abfallstoffbehandlungsanlage gemäß Anspruch 11, **dadurch gekennzeichnet, dass** der Fluidisierbettboiler so eingerichtet ist, dass er die Wärme erzeugt, die bei der Pyrolyse von Kunststoffen benötigt wird, und die Feststoffverbrennungsreststoffe verwendet, die bei der Pyrolyse erzeugt werden.

## Revendications

1. Procédé pour le traitement de déchets, en particulier pour l'utilisation de matériaux recyclables contenus dans des déchets, dans lequel les déchets sont prétraités pour l'enlèvement de la matière indésirable, une fraction de fibres et une fraction de plastiques sont séparées des autres déchets, la fraction de fibres est traitée pour donner une matière première pour le papier ou le carton, et les sous-produits des traitements et la fraction de déchets qui reste du traitement sont utilisés en tant qu'énergie pour les besoins des traitements,
**caractérisé en ce que**
le procédé comprend des étapes dans lesquelles les déchets sont triturés dans un pulpeur à fonctionnement continu de haute compacité pour mettre en suspension dans l'eau les fibres contenues dans les déchets,
une fraction de fibres et une fraction de plastiques sont déchargées de façon continue du pulpeur en tant que fraction séparée,
la fraction de plastiques est lavée en une ou plusieurs étapes, l'eau utilisée pour le lavage de la fraction plastique est recyclée pour être mélangée avec la fraction de fibres, et
la fraction de plastiques est traitée pour donner le bain plastique dans un pyrolyseur.

2. Procédé selon la revendication 1, **caractérisé en ce qu'**il comprend une étape dans lequel le bois de déchets est séparé des autres déchets et traité pour donner une matière première pour un panneau de particules ou équivalent.

3. Procédé selon la revendication 1 ou 2,
**caractérisé en ce que** au moins certaines des eaux de traitement de l'installation de traitement de déchets sont traitées et remises en circulation.

4. Procédé selon l'une quelconque des revendications précédentes, **caractérisé en ce que** les plastiques de PVC sont séparés de la fraction de plastiques avant que les plastiques ne soient traités pour donner le bain de plastique.

5. Procédé selon la revendication 4, **caractérisé en ce que** les plastiques de PVC sont passés en production d'énergie.

6. Procédé selon l'une quelconque des revendications précédentes, **caractérisé en ce qu'**une chaudière à lit fluidisé est utilisée dans la production d'énergie, laquelle chaudière génère la chaleur nécessaire à la pyrolyse des plastiques et utilise les résidus de combustion solides produits par la pyrolyse.

7. Installation de traitement de déchets, en particulier une installation pour le traitement des fractions de déchets appropriées pour le recyclage de matériau, comprenant des dispositifs pour enlever des matières indésirables des déchets, des dispositifs pour séparer une fraction de fibres et une fraction de plastiques des autres déchets, des dispositifs pour le traitement de la fraction de fibres en une matière première pour le papier et le carton, et des dispositifs pour produire l'énergie nécessaire dans les différents traitements de l'installation de traitement de déchets, lesquels dispositifs ont été agencés pour utiliser comme combustible les sous-produits qui ont été produits dans les différentes étapes de traitement et la fraction de déchets qui reste du traitement,
**caractérisée en ce que**
l'installation comprend un pulpeur pour séparer la fraction de fibres et la fraction de plastiques,
des dispositifs pour laver la fraction de plastiques en une ou plusieurs étapes, dans laquelle l'eau pour laver la fraction de plastiques est recyclée pour être mélangée avec la fraction de fibres, et
un pyrolyseur pour traiter la fraction de plastiques et donner un bain de plastique comme traitement thermique.

8. Installation de traitement de déchets selon la revendication 7, **caractérisée en ce qu'**elle comprend additionnellement des dispositifs pour séparer le bois de déchets des autres déchets et des dispositifs pour le traiter en une matière première pour des panneaux de particules ou équivalents.

9. Installation de traitement de déchets selon la revendication 7 ou 8, **caractérisée en ce qu'**elle comprend des dispositifs pour traiter et faire circuler des eaux de traitement.

10. Installation de traitement de déchets selon l'une quelconque des revendications 7 à 9, **caractérisée en ce qu'**elle comprend des dispositifs pour séparer les plastiques PVC de la fraction de plastiques de déchets avant que les plastiques ne soient traités en un bain de plastique.

11. Installation de traitement de déchets selon la revendication 7, **caractérisée en ce qu'**elle comprend une chaudière à lit fluidisé disposée pour générer l'énergie nécessaire dans les traitements et pour brûler les déchets qui ont été produits.

12. Installation de traitement de déchets selon la revendication 11, **caractérisée en ce que** la chaudière à lit fluidisé a été agencée pour générer la chaleur nécessaire à la pyrolyse des plastiques et pour utiliser des résidus de combustion solides produits par la pyrolyse.
